(19) **Europäisches Patentamt European Patent Office Office européen des brevets**

(11) **EP 4 447 537 A1**

(12) **EUROPEAN PATENT APPLICATION**

(43) Date of publication:
**16.10.2024 Bulletin 2024/42**

(21) Application number: **23305537.5**

(22) Date of filing: **11.04.2023**

(51) International Patent Classification (IPC):
*H04W 28/02* (2009.01)     *H04W 28/08* (2023.01)
*H04W 40/12* (2009.01)     *G05B 19/418* (2006.01)

(52) Cooperative Patent Classification (CPC):
**H04W 28/08; H04W 28/0284; H04W 28/0925;
H04W 28/0958; H04W 28/0967; H04W 40/12;**
H04L 45/08

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Mitsubishi Electric R&D Centre Europe B.V.
1119 NS  Schiphol Rijk Amsterdam (NL)**
Designated Contracting States:
**FR**
• **MITSUBISHI ELECTRIC CORPORATION
Chiyoda-ku
Tokyo 100-8310 (JP)**
Designated Contracting States:
**AL AT BE BG CH CY CZ DE DK EE ES FI GB GR
HR HU IE IS IT LI LT LU LV MC ME MK MT NL NO
PL PT RO RS SE SI SK SM TR**

(72) Inventors:
• **BOUTTIER, Arnaud
35708 RENNES CEDEX 7 (FR)**
• **CORLAY, Vincent
35708 RENNES CEDEX 7 (FR)**

(74) Representative: **Plasseraud IP
104 Rue de Richelieu
CS92104
75080 Paris Cedex 02 (FR)**

(54) **METHOD FOR CONTROLLING A CONTROLLED DEVICE BY A CONTROL SERVER, BY USING A QOS-BASED WIRELESS COMMUNICATION SYSTEM**

(57)     The present disclosure relates to a method (40), implemented by a control server (30), for controlling a controlled device (20), said control aiming at causing the controlled device to perform a task by sending control commands to said controlled device by using a wireless communication system (70), wherein said wireless communication system supports an establishment of different quality of service, QoS, flows associated to respective different QoS levels, said control method (40) comprising:

- (S40) establishing at least two QoS flows for sending control commands to the controlled device, said at least two QoS flows comprising a first QoS flow and a second QoS flow, wherein the first QoS flow is associated to a greater QoS level than a QoS level associated to the second QoS flow,

- (S41) determining a control command to be sent to the controlled device,

- (S42) selecting a QoS flow to be used for sending the control command, among the at least two QoS flows established,

- (S43) sending the control command to the at least one controlled device, via the wireless communication system, by using the selected QoS flow.

Fig. 4

**Description**

<u>TECHNICAL FIELD</u>

The present disclosure relates to the automatic control of one or more controlled devices by a control server and relates more specifically to a control method and system using a quality of service, QoS, based wireless communication system for exchanging control data.

<u>BACKGROUND ART</u>

The automatic control theory is the science dealing with methods for the determination of laws for controlling dynamical systems that can be realized by automatic devices, i.e., without human intervention.

At any given time, a controlled system has a state $s_t$ representing a point in an appropriate state space $\mathcal{S}$. The controlled system is typically made of one or several controlled devices, usually referred to as the plant, that is required to be steered from an arbitrary initial state to an arbitrary final state or more generally to follow a target trajectory. The state of the controlled system is driven by a controller that generates control commands applied to the plant through actuators. The controlled system (plant) and the controller are collectively referred to as control system. There are two common classes of control systems, namely open loop and closed loop control systems. In an open-loop control system, the control command from the controller is independent of the state of the plant while in a closed loop control system, the control command is dependent on the desired and actual plant states, as measured using sensors.

Here, we focus on control applications where the plant and the controller are connected using a wireless communication system to transmit the control commands to the actuators and, for a closed loop control system, to retrieve the state measurements from the sensors. Control applications can rely on any wireless communication technology such as Wi-Fi, Bluetooth, LTE, etc. More recently, the 3GPP standardization body specified the 5G wireless communication system that incorporates dedicated means to address control applications, and more specifically ultra-reliable and low latency communications (URLLC). Wireless communication systems are suitable for mobile or transportable controlled devices such as robots or vehicles of any kind such as automated guided vehicles (AGV), autonomous mobile robots (AMR), etc. On the other hand, wireless communication systems are prone to packet losses due to radio propagation effects but also congestion effects when the timely transmission of packets requires more radio resources than available. As a result, the design of the control applications must account for the possible occurrence of packet losses and/or transmission delays.

It is common to define a minimal level of performance that shall be achieved by the control application as measured using application-related performance indicators. This is often described as the expected application-level quality of experience (QoE). Due to possible fluctuations in the communication channel, the performance of the wireless link may change over time for a given configuration of the communication parameters. It is not the purpose of the control applications to define the communication parameters of the wireless communication system. From a control application standpoint, the wireless communication system appears most of the time as a black box that randomly loses packets and/or delays their delivery. A common solution is to define a level of minimal communication-related performance, the so-called quality of service (QoS), to be achieved by the wireless communication system to reach the expected QoE. It is then the task of the wireless communication system to adjust its configuration to fulfil the objective regardless the changes in the communication channel. In such wireless communication systems, hereafter referred to as QoS-based wireless communication systems, the packets are tagged with a QoS indicator or identifier that is used by the wireless communication system to enforce the expected level of QoS.

Most of the control applications do not support QoE or QoS indicators that would be used to tag the packets to be transmitted. To cope with this kind of situations, we focus here on wireless communication systems that rely on a QoS flow mechanism, where the wireless communication system establishes a logical channel within which all the packets are transmitted according to the same QoS profile. Basically, the control application negotiates beforehand the establishment of a QoS flow, and the wireless communication system then automatically tags the packets with the corresponding QoS indicator using e.g., filtering mechanisms based e.g. on input and output IP or MAC addresses, application type, etc.

The negotiation phase, a.k.a. admission control, is meant to check if the wireless communication system can enforce the requested QoS profile with respect to its available resources and to the wireless communication system's current load.

Prior to the transmission, control applications need to select the QoS profile (i.e. QoS level) required to achieve the expected QoE. The conventional approach is to select a QoS profile that is suitable for the most demanding situation, since establishing a QoS flow is time-consuming and is therefore performed once for all prior to any control data transmission. By doing so, the wireless communication system can enable the control application to achieve the expected QoE in any situation. However, if applying such a QoS profile, suitable for the most demanding situation, enables to get the appropriate performance at any time for the control application, it also leads the wireless communication system to allocate more radio resources than required most of the time, leading to possible congestions between control applications sharing the same radio resources. Such congestions should be avoided because they can lead to a temporary decrease of the QoS level actually achieved. Applying such a QoS profile (suitable for the most demanding situation) at any time also reduces the amount of radio resources available for other control applications that would apply for admission to the wireless communication system, possibly leading the admission control to rejecting many control applications.

## SUMMARY

The present disclosure aims at improving the situation. In particular, the present disclosure aims at addressing at least in part some or all of the limitations of the prior art discussed above, by proposing a solution enabling, in some cases at least, to reduce the congestion probability and/or to reduce the admission control's rejection rate, while still enabling to meet the QoE requirements of a control application in most cases.

For this purpose, and according to a first aspect, the present disclosure relates to a method, implemented by a control server, for controlling a controlled device, said control aiming at causing the controlled device to perform a task by sending control commands to said controlled device by using a wireless communication system, wherein said wireless communication system supports an establishment of different quality of service, QoS, flows associated to respective different QoS levels of the wireless communication system. Said control method comprises:

- establishing at least two QoS flows for sending control commands to the controlled device, said at least two QoS flows comprising a first QoS flow and a second QoS flow, wherein the first QoS flow is associated to a greater QoS level than a QoS level associated to the second QoS flow,
- determining a control command to be sent to the controlled device,
- selecting a QoS flow to be used for sending the control command, among the at least two QoS flows established,
- sending the control command to the at least one controlled device, via the wireless communication system, by using the selected QoS flow.

Hence, the control server, which executes the control application, establishes two or more QoS flows for the same control application (whereas in the prior art a control application has only one QoS flow associated thereto). From the wireless communication system's standpoint, the control server is therefore seen as executing two or more different control applications having different QoS level requirements (i.e. different QoS profiles). The wireless communication system is somehow lured into considering that the control server executes two (or more) different control applications. Hence, no modification of the wireless communication system is needed, and the control application may for instance associate different ports to the different QoS flows established to allow for the automatic filtering of the traffic of the different QoS flows.

The at least two QoS flows established are associated to different QoS levels, and the QoS level provided by the first QoS flow is greater than the QoS level provided by the second QoS flow. By "greater QoS level", we mean that the QoS profile of the first QoS flow enables to achieve a greater control command delivery performance than the QoS profile of the second QoS flow. The "control command delivery performance" relates to the performance of the delivery of control commands, which is representative of how reliably a control command can be delivered to the controlled device and/or of how fast a control command can be delivered to said controlled device. In other words, with the first QoS flow, a control command can be expected to be delivered to the controlled device more reliably (e.g. with a smaller packet error rate due to propagation losses and/or radio resources shortage) and/or faster (i.e. with a smaller delay) than with the second QoS flow. Typically, the QoS level of the first QoS flow corresponds to a QoS level that is suitable for the most demanding situation, i.e. which is considered to enable the control application to achieve the expected QoE in any situation. In turn, the QoS level of the second QoS flow provides a lower control command delivery performance and cannot be considered to enable the control application to achieve the expected QoE in any situation.

Since the at least two QoS flows established relate to the same control application, the traffic generated by the control application will be split among the at least two QoS flows, such that each established QoS flow will handle less traffic than if only a single QoS flow had been established. However, when using the second QoS flow, the wireless communication system may in some cases allocate fewer radio resources for transmitting the control commands than when using the first QoS flow. Accordingly, using at least from time to time the second QoS flow will result in reducing the amount of radio resources used by the control application compared to using always the first QoS flow, thereby reducing the congestion probability. For instance, the first QoS flow may be used by default, and the second QoS flow may be used only when a predetermined condition is verified (e.g. when a congestion is likely to occur, i.e. a congestion-related condition), provided that the QoS level of the second QoS flow enables achieving the expected QoE for a current phase of the task. In another example, the second QoS flow may be used by default, and the first QoS flow may be used only when a predetermined condition is verified (e.g. when a phase of the task requires a better QoS level to achieve the expected QoE, i.e. a task phase-related condition).

As discussed above, in the prior art, the QoS level of the single QoS flow established was determined by considering the most demanding situation. However, depending on the nature of the control application, the QoS level (in terms of control command delivery performance) required to achieve the expected QoE may change over time. For instance, the packet error rate (PER) required for the control of a moving robot is not the same when the robot is going into a straight line at low speed or when the robot negotiates a U-turn at a significant speed. While being in a straight line, the robot can afford losing more packets as the control command does not vary significantly over time (in case a control command is lost, it is possible to use the previous one). Hence, by establishing at least two QoS flows providing different respective QoS levels, it is possible to use the second QoS flow (and therefore use fewer radio resources than when using the first QoS flow) when e.g. the expected QoE may still be achieved with less stringent QoS level requirements.

Hence, the proposed solution enables, in some cases at least, to reduce the amount of radio resources used by the control application of the control server, thereby reducing the congestion probability due to radio resources shortage, despite the wireless communication system being a black box to the control server. The wireless communication system provides the control server with at least two different QoS flows as if a plurality of different control applications were executed.

In specific embodiments, the control method can further comprise one or more of the following optional features, considered either alone or in any technically possible combination.

In specific embodiments, the task to be performed by the controlled device comprises a plurality of successive phases having respective QoS level requirements associated thereto and selecting the QoS flow comprises identifying which QoS flow among the at least two QoS flows established is compatible with the current phase of the task in that it provides a QoS level compatible with the QoS level required for the current phase of the task, the selected QoS flow corresponding to a QoS flow identified as compatible with the current phase of the task. For instance, the selected QoS flow corresponds to the compatible QoS flow established having the lowest control command delivery performance associated thereto.

In specific embodiments, selecting the QoS flow comprises:

- evaluating whether the wireless communication system is congested or close to be congested, and
- responsive to detecting that the wireless communication system is congested or close to be congested: not considering the first QoS flow during the selection of the QoS flow (at least if the QoS level of the first QoS flow is not required to achieve the expected QoE for the current or next phase of the task).

In specific embodiments, when the wireless communication system is detected to be congested or close to be congested, the first QoS flow is not considered during the selection of the QoS flow only if a QoS level required for a current phase of the task to be performed by the controlled device is also provided by a QoS flow, among the at least two QoS flows established, other than the first QoS flow.

In specific embodiments, the first QoS flow is used only when it is determined that the QoS level required for the current phase of the task is not provided by another QoS flow among the at least two QoS flows established.

In specific embodiments, the control method further comprises receiving a control feedback from the controlled device and the QoS flow is selected based on the received control feedback. In some non-limitative examples, the control feedback includes a measurement of a state of the controlled device in relation with the task and the QoS flow is selected based on the received state measurement. In some non-limitative examples, the control command is determined based on the received state measurement.

In specific embodiments, the selection of the QoS flow uses a selection policy which includes a machine learning model trained by using a reinforcement learning algorithm.

In specific embodiments, the machine learning model comprises a neural network trained by using a deep Q-learning reinforcement learning algorithm.

In specific embodiments, the reinforcement learning algorithm uses a reward function which combines a first term and a second term, wherein:

- the first term is representative of a control performance of the control of the controlled device by the control server, and decreases the reward when the control performance decreases,
- the second term decreases the reward when the first QoS flow is used compared to when the second QoS flow is used.

In specific embodiments, the reinforcement learning algorithm uses a reward function which returns a smaller reward when the first QoS flow is used compared to when the second QoS flow is used, and wherein the training of the machine learning model is carried out under a constraint that the resulting selection policy satisfies a control performance criterion.

In specific embodiments, the control server controls a plurality of controlled devices, and the machine learning model of the selection policy is trained by using a multi-agent reinforcement learning algorithm.

According to a second aspect, the present disclosure relates to a computer program product comprising instructions which, when executed by at least one processor, configure said at least one processor to carry out a control method according to any one of the embodiments of the present disclosure.

According to a third aspect, the present disclosure relates to a computer-readable storage medium comprising instructions which, when executed by at least one processor, configure said at least one processor to carry out a control method according to any one of the embodiments of the present disclosure.

According to a fourth aspect, the present disclosure relates to a control server for controlling a controlled device, said control aiming at causing the controlled device to perform a task, said control server comprising a processing circuit and a communication unit which are configured to carry out a control method according to any one of the embodiments of the present disclosure.

According to a fifth aspect, the present disclosure relates to a control system comprising a control server according to any one of the embodiments of the present disclosure, and at least one controlled device controlled by the control server via a wireless communication system.

In specific embodiments, the wireless communication system is a 5G wireless communication system.

## BRIEF DESCRIPTION OF DRAWINGS

The invention will be better understood upon reading the following description, given as an example that is in no way limiting, and made in reference to the figures which show:

- Figure 1: a schematic representation of a control system and a wireless communication system,
- Figure 2: a schematic representation of an exemplary embodiment of a controlled device of the control system,
- Figure 3: a schematic representation of an exemplary embodiment of a control server of the control system,
- Figure 4: a diagram representing the main steps of an exemplary embodiment of a control method,
- Figure 5: a diagram representing the main steps of another exemplary embodiment of the control method,
- Figure 6: a plot illustrating simulation results showing the control performance of the control method.

In these figures, references identical from one figure to another designate identical or analogous elements. For reasons of clarity, the elements shown are not to scale, unless explicitly stated otherwise.

Also, the order of steps represented in these figures is provided only for illustration purposes and is not meant to limit the present disclosure which may be applied with the same steps executed in a different order.

## DESCRIPTION OF EMBODIMENTS

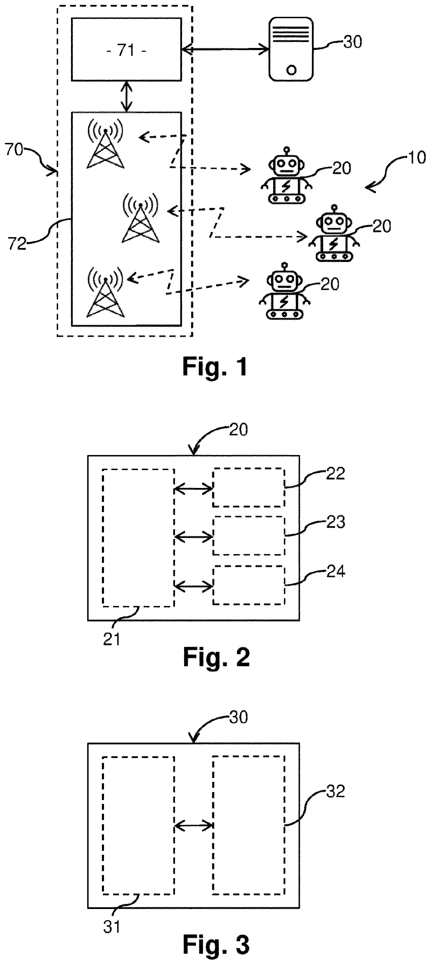

Figure 1 represents schematically an exemplary embodiment of a control system 10. As illustrated by figure 1, the control system 10 comprises a control server 30 which controls a controlled system composed of one or more controlled devices 20. The control aims at causing the controlled system to perform a given task, which may be defined in a state space $\mathcal{S}$ of the controlled system as causing the state of the controlled system to follow a target trajectory. The control system 10 may be open loop or closed loop, depending on the embodiments. In order to cause the controlled system to perform the desired task, the control server 30 sends control commands to each controlled device 20 via a wireless communication system 70. The control server 30 may also receive, via the wireless communication system 70, control feedback from each controlled device 20, in particular in the case of a closed loop control system 10.

The wireless communication system 70 is used to establish a wireless communication link with each controlled device 20. The control commands received from the control server 30 are forwarded to the controlled device(s) 20 over the wireless communication links. The control feedback received from the controlled device(s) 20 on the wireless communication link(s), if any, is forwarded to the control server 30. The wireless communication system 70 may use any wireless communication technology and the choice of a specific wireless communication technology corresponds to a non-limitative specific embodiment of the present disclosure. For instance, the wireless communication system may use at least one of the following wireless communication technologies: Wi-Fi, Bluetooth, LTE, 5G, etc.

The wireless communication system 70 comprises one or more wireless nodes (e.g. base stations, access points, etc.) which establish the wireless communication links with the controlled devices 20. The one or more wireless nodes form a radio access network, RAN, 72 of the wireless communication system 70. The wireless communication system 70 may also comprise a core network, CN, 71 via which it may exchange data with e.g. the control server 30, for instance control commands to be transmitted on the wireless communication links to the controlled devices 20 and control feedback received on said wireless communications links from the controlled devices 20.

The wireless communication system 70 supports an establishment of different QoS flows associated to respective different QoS levels. As discussed above, a QoS flow corresponds to a logical channel associated to a respective QoS profile. Such a QoS flow is used to exchange application-level traffic and the QoS profile describes the QoS level that the wireless communication system 70 is due (by contract) to enforce for said QoS flow. For instance, different QoS flows are established for exchanging respectively guaranteed bit rate, GBR, traffic and best effort traffic. A QoS profile may define the QoS level enforced in terms of e.g. guaranteed bit rate, priority level, PER, latency (a.k.a. packet delay budget, PDB), etc. In principle, a user application is associated to a single QoS profile and exchanges application-level traffic by using the corresponding single QoS flow. Once the QoS flow established for the desired QoS profile / level, the wireless communication system 70 is seen by the control system 10 as a black box used to exchange application-level traffic. In particular, the control server 30 does not need to care about the communication parameters (e.g. modulation, coding rate, etc.) and radio resources used on the wireless communication links, or about the packets that may be lost, etc. The control server 30 merely assumes that the requested QoS profile / level is enforced by the wireless communication system 70.

Figure 2 represents schematically an exemplary embodiment of a controlled device 20. The controlled device 20 may be any type of device that may be remotely controlled, for instance a robot in a factory, a manned or unmanned vehicle, etc.

As illustrated by figure 2, the controlled device 20 comprises a wireless communication unit 22, for receiving and sending data to the RAN 72 of the wireless communication system 70. The wireless communication unit 22 therefore supports the wireless communication technology used by the wireless communication system 70 (e.g. Wi-Fi, Bluetooth, LTE, 5G, etc.), in order to establish a wireless communication link with the RAN 72.

The controlled device 20 comprises one or more actuators 23 (e.g. motor, etc.) that can be controlled to modify the state of the controlled device 20 in the state space $\mathcal{S}$. In some embodiments, and as illustrated by figure 2, the controlled device 20 comprises one or more sensors 24 for performing measurements in relation with the state of the controlled device 20, which may be included in control feedback sent to the control server 30.

The controlled device 20 comprises also a processing circuit 21 connected to the wireless communication unit 22, to the one or more actuators 23 and to the one or more sensors 24, if any. For instance, the processing circuit 21 comprises one or more processors and one or more memories. The one or more processors may include for instance a central processing unit (CPU), a digital signal processor (DSP), a field-programmable gate array (FPGA), an application specific integrated circuit (ASIC), etc. The one or more memories may include any type of computer readable volatile and non-volatile memories (magnetic hard disk, solid-state disk, optical disk, electronic memory, etc.). The one or more memories may store a computer program product, in the form of a set of program-code instructions to be executed by the one or more processors in order to control the one or more actuators 23 based on the control commands received from the control server 30 and, possibly, to generate control feedback based on the measurements provided by the one or more sensors 24.

Figure 3 represents schematically an exemplary embodiment of a control server 30.

As illustrated by figure 3, the control server 30 comprises a communication unit 32, for exchanging data with the wireless communication system 70, in order to exchange data with the controlled device(s) 20 via the RAN 72 of the wireless communication system 70. Typically, the control server 30 may exchange data with the CN 71 of the wireless communication system 70, which data is exchanged with the controlled device(s) 20 via the RAN 72 of the wireless communication system 70. However, in some cases, the control server 30 may also be connected via a wireless communication link to the RAN 72 of the wireless communication system 70, like the controlled device(s) 20. Hence, the communication unit 32 of the control server 30 may support any wired and/or wireless communication technology suitable to exchange data with the CN 71 and/or the RAN 72 of the wireless communication system 70.

The control server 30 comprises also a processing circuit 31 connected to the communication unit 32. For instance, the processing circuit 31 comprises one or more processors and one or more memories. The one or more processors may include for instance a CPU, a DSP, an FPGA, an ASIC, etc. The one or more memories may include any type of computer readable volatile and non-volatile memories (magnetic hard disk, solid-state disk, optical disk, electronic memory, etc.). The one or more memories may store a control application in the form of a computer program product comprising a set of program-code instructions to be executed by the one or more processors in order to remotely control the one or more controlled devices 20 via the wireless communication system 70 (by e.g. by generating control commands for the controlled devices 20 and by processing control feedback, if any).

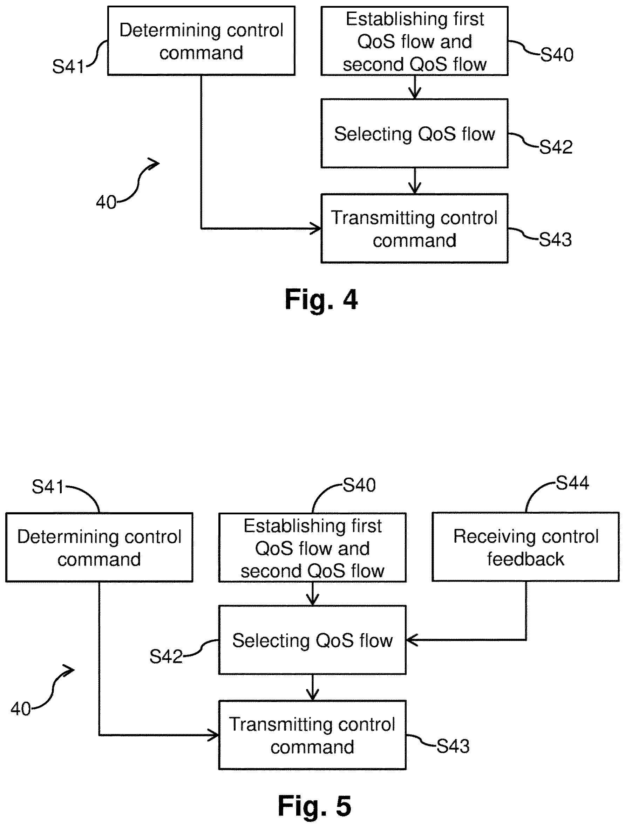

Figure 4 represents schematically the main steps of an exemplary embodiment of a control method 40, implemented by the control server 30.

As illustrated by figure 4, the control method 40 comprises a step S40 of establishing, for the control application, at least two QoS flows for sending control commands to the controlled device(s) 20. The at least two QoS flows established are associated to different QoS levels and comprise a first QoS flow and a second QoS flow. The first QoS flow is, among the established QoS flows, the established QoS flow providing the best QoS level and the QoS level provided by the first QoS flow is therefore greater than the QoS level provided by the second QoS flow. In other words, control commands are expected to be delivered to the controlled device 20 more reliably and/or faster when using the first QoS flow than when using the second QoS flow. For instance, if a QoS profile / level is defined by e.g. a priority level, a PER, and a latency, then:

- with two QoS profiles defined by a same PER and latency, the QoS profile having a greater priority level will provide a greater QoS level (in terms of control command delivery performance), since control commands will be prioritized (and therefore less often rejected due to radio resources shortage, thereby making the control command delivery both more reliable and faster) over packets, exchanged via the wireless communication system 70, having lower priority levels,
- with two QoS profiles defined by a same priority level and latency, the QoS profile having a lower PER will provide a greater QoS level (in terms of control command delivery performance), since control commands will be delivered with less packet losses than with the other QoS profile having a greater PER,
- with two QoS profiles defined by a same priority level and PER, the QoS profile having a lower latency will provide a greater QoS level (in terms of control command delivery performance), since control commands will be delivered faster than with the other QoS profile having a greater latency, etc.

Hence, in the present disclosure, two different QoS flows (at least) are established for the same control application, whereas in the prior art solutions a user application is theoretically associated to a single QoS profile and exchanges application-level traffic by using the corresponding single QoS flow. From the wireless communication system's standpoint, the control server 30 is therefore seen as executing two different control applications having different QoS level requirements (i.e. different QoS profiles). For instance, the first QoS flow may be established to exchange delay critical (e.g. periodic) GBR traffic while the second QoS flow established may be established to exchange best effort traffic. Typically, the QoS level of the first QoS flow corresponds to a QoS level that is suitable for the most demanding situation, i.e. which is considered to enable the control application to achieve the expected QoE in any situation. In turn, the QoS level of the second QoS flow provides a lower control command delivery performance and cannot be considered to enable the control application to achieve the expected QoE in any situation.

As illustrated by figure 4, the control method 40 comprises a step S41 of determining a control command to be sent to the controlled device(s) 20.

The control method 40 comprises also a step S42 of selecting a QoS flow to be used for sending the control command, among the at least two QoS flows established.

Then the control method 40 comprises a step S43 of sending the control command to the controlled device(s) 20, via the wireless communication system 70. During the step S43, the control server 30 sends the control command to the wireless communication system 70 and instructs said wireless communication system 70 to send the control command to the controlled device(s) by using the selected QoS flow. For instance, the control application may associate different ports (e.g. TCP or UDP ports) to the different QoS flows established, and the wireless communication system 70 may filter the control command based on the port from which it is received, and forward said control command to the associated QoS flow.

Of course, the steps S41, S42, S43 may be repeated during the control operations, until the task to be performed is completed. In some embodiments, the step S42 of selecting a QoS flow may be executed for each control command generated. However, it is also possible, in other embodiments, to execute the QoS flow selecting step S42 less frequently, i.e. not every time a new control command is generated by the control application of the control server 30.

In some embodiments, it is possible to establish more than two QoS flows during step S40. For instance, it is possible to establish a third QoS flow having an associated QoS level that is lower than the QoS level of the first QoS flow and that is different (lower or greater) than the QoS level of the second QoS flow. The QoS flow selecting step S42 has therefore three different options for selecting a QoS flow for transmitting a control command, associated respectively to three different QoS levels (in terms of control command delivery performance). In the following, we assume in a non-limitative manner than only two QoS flows are established (i.e. the first QoS flow and the second QoS flow) unless explicitly stated otherwise, or at least that the second QoS flow corresponds to the established QoS flow having the lowest QoS level associated thereto.

It should be noted that the first QoS flow uses typically more radio resources than the second QoS flow to exchange the same amount of control data. The control application of the control server 30 may therefore impact the amount of radio resources actually used for controlling the controlled device(s) 20 by not selecting always the same QoS flow. If the first QoS flow corresponds to the QoS profile / level suitable for the most demanding situation, then using from time to time the second QoS flow instead of the first QoS flow will reduce the amount of radio resources used compared to the prior art discussed above.

In particular, it should be noted that the QoS level of the first QoS flow is not always required to achieve the expected QoE. For instance, the task to be performed by a controlled device 20 may comprise a plurality of successive phases having different characteristics which may enable achieving the expected QoE with different QoS profiles / levels. For instance, the QoS level (in terms of control command delivery performance) required for the control of a moving robot is not the same when the robot is going into a straight line at low speed or when the robot negotiates a U-turn at a significant speed. Hence, moving in a straight line at low speed and negotiating a U-turn at a significant speed correspond to respectively a first phase and a second phase requiring different QoS levels to achieve the expected QoE. While the first QoS flow enables achieving the expected QoE during both the first phase and the second phase, it may be advantageous to use the second QoS flow during the first phase, in order to reduce the amount of radio resources used, if its QoS level is compatible with the QoS level required for the first phase (i.e. if its control command delivery performance is considered sufficient to achieve the expected QoE).

The QoS flow selecting step S42 uses a selection policy in order to select the QoS flow to be used. The control method 40 may use different selection policies and the choice of a specific selection policy corresponds to a non-limitative specific embodiment of the control method 40.

For instance, the selection policy may consist in using the first QoS flow by default and using the second QoS flow only when one or more predetermined conditions are verified. Such a selection policy therefore focuses on the control performance, by using by default the QoS flow having the best QoS level, i.e. the first QoS flow. For instance, it is possible to consider a condition related to the congestion of the wireless communication system 70. In such a case, the QoS flow selecting step S42 may comprise evaluating whether the wireless communication system 70 is congested or close to be congested (i.e. likely to be congested in a near future) and, if the wireless communication system 70 is detected to be congested (or close to be congested), then the second QoS flow is used instead of the first QoS flow (or another established QoS flow having a lower QoS level associated thereto, if any). In such embodiments, the control server 30 may benefit from the best QoS level, as ensured by the first QoS flow, except when it can no longer be provided by the wireless communication system 70. This may further be subject to a condition on the QoS level required for the current phase of the task (task phase-related condition). Hence, if a congestion is detected, the second QoS flow may be used only if its QoS level is compatible with the QoS level required to perform the current phase of the task (i.e. if its control command delivery performance enables achieving the expected QoE). If not compatible, the first QoS flow is still used. It should be noted that, if the control server 30 controls a plurality of controlled devices 20, other controlled devices 20 may be in respective phases requiring lower QoS levels. Hence, these other controlled devices 20 may switch to their second QoS flows, to reduce the amount of radio resources used globally. Hence, the selection policy may consider one or more congestion-related and/or task phase-related conditions to decide whether to switch from the first QoS flow to another QoS flow.

The congestion of the wireless communication system 70 may be detected by using any method known to the skilled person, and the choice of a specific congestion detection method corresponds to a specific but non-limitative embodiment of the present disclosure. For instance, the control server 30 may detect that the wireless communication system 70 is congested (or close to be congested) e.g. based on control feedback received (or not) from the controlled device 20. If no control feedback is received or if the received control feedback indicates that one or more control commands have not been received by the controlled device 20, then the control server 30 may consider that the wireless communication system 70 is likely congested. According to another example, the control server 30 may detect that the wireless communication system 70 is likely congested e.g. based on reports from said wireless communication system 70. Indeed, the wireless communication system 70 may provide reports on e.g. lost packets which may be used to detect a congestion. If such reports are not received in real-time, they can nonetheless be used, for instance, for building a temporal congestion model representing a congestion probability as a function of time. Indeed, in some cases, some congestion events might occur e.g. in a substantially periodic manner and such a substantially periodic behavior can be detected by using the received reports, such that the temporal congestion model can be used to predict when the next congestion event is likely to occur.

In another example, the selection policy may consist in using the second QoS flow by default and using the first QoS flow only when one or more predetermined conditions are verified. Such a selection policy therefore focuses on minimizing the amount of radio resources used by the control application (and therefore reducing the congestion probability), by using by default the QoS flow requiring the fewest radio resources, e.g. the second QoS flow. For instance, it is possible to consider a condition related to the QoS level required to perform the current phase of the task (task phase-related condition). In such a case, the QoS flow selecting step S42 may comprise determining a QoS level required for a current phase of the task and identifying which QoS flow among the established QoS flows established is compatible with the QoS level required for the current phase of the task in that it provides a control command delivery performance that enables achieving the expected QoE during the current phase of the task. For instance, the selected QoS flow corresponds to the compatible QoS flow established having the lowest QoS level associated thereto, such that the first QoS flow is used only when it is strictly required to comply with the QoS level requirement (i.e. when the expected QoE is not considered to be achievable when using an established QoS flow other than the first QoS flow).

For instance, the plurality of phases of the task for each controlled device 20 may be known a priori, together with the associated QoS level requirements. In such a case, the control server 30 simply detects the current phase of the task accomplished by the controlled device 20 and selects a QoS flow compatible with the detected current phase of the task. This is possible, for instance, if a predefined sequence of phases needs to be executed to perform the task, such that the control server 30 may predict which one is the current phase based on e.g. the duration of each phase, the position of the state of the controlled device 20 along the predetermined trajectory, etc. In the case of an open loop control system 10, the control server 30 may for instance predict the current phase of the task performed by the controlled device 20 e.g. based on the control commands sent to said controlled device 20. In the case of a closed loop control system 10, the control server 30 may for instance detect the current phase of the task performed by the controlled device 20 e.g. based on the control feedback (e.g. based on the state measurement it includes) received from said controlled device 20.

Figure 5 represents schematically the main steps of a specific embodiment of the control method 40. In addition to the steps discussed in relation with figure 4, the control method 40 comprises also a step S44 of receiving a control feedback from the controlled device 20. The control feedback includes for instance a measurement of the state of the controlled device 20 in relation with the task, provided by the one or more sensors 24, and/or an indicator of the control commands received by the controlled device 20. Such a control feedback may be present in the case of a closed loop control system 10, to let the control server 30 know the current state of the controlled device 20 and adjust the determined control commands accordingly. However, such a control feedback may also be present in the case of an open loop system, to let the control server 30 know the current state of the controlled device 20 and determine the QoS level required given the current state of the controlled device 20. Indeed, such a state measurement may be useful to account for unexpected situations such as e.g. the presence of an unexpected obstacle that needs to be avoided (which may be detected e.g. if one of the sensors 24 is a camera monitoring the environment of the controlled device 20), etc. It is therefore emphasized that the plurality of successive phases of the controlled device 20 are not necessarily known beforehand, and some of them at least may be unexpected ones that need to be detected to adjust the QoS level by selecting the appropriate QoS flow among the first QoS flow and the second QoS flow.

More generally speaking, the selection policy selects the QoS flow to be used according to the status of the control system 10. For instance, the selection may be performed based on a set of variables, referred to as QoS flow selection variables, which may include the current state of the controlled system (which may be measured and/or predicted), the position of the controlled device 20, the target trajectory, a distance to a nearest obstacle, etc. The domain described by these QoS flow selection variables may be divided in two regions (for the first QoS flow and the second QoS flow, respectively) typically from the computation of norm function(s) along the QoS flow selection variables and the comparison to predetermined decision thresholds. Finally, for each control command to be transmitted, the control application selects the QoS flow according to the region in which the values of the QoS flow selection variables fall in.

It is emphasized that, despite used to configure parameters of the wireless communication system 70 (i.e. first QoS flow or second QoS flow), these QoS flow selection variables are mainly related to the state of the control system 10 and not to the state of the wireless communication system 70 (except when attempting to detect and/or avoid a congestion). Hence, the selection policy is mainly (or only, in some cases) driven by the state of the controlled device(s) 20, which does not depend on the state of the wireless communication system 70.

In specific embodiments, the selection policy includes a machine learning model (e.g. a neural network) that receives as input the values of the QoS selection variables and outputs the selected QoS policy, wherein the machine learning model is previously trained via reinforcement learning. In other words, the selection policy is implemented by a machine learning model, and the selection policy is optimized by using a reinforcement learning algorithm.

First, one shall notice that the problem to solve can be modeled as a Markov Decision Process (MDP), i.e. an agent-environment framework in which an agent sequentially interacts with its environment by executing actions and receiving from the environment observations of the next state and reward for these actions. At each iteration, the agent needs to choose an action between a finite set of predefined actions. For each action, the agent moves to another state with a given probability that reflects the impact of the environment. The goal in an MDP is to find a good policy for the decision maker: a function $\pi(.)$ that specifies the action $\alpha_t = \pi(s'_t)$ that the decision maker will choose when in state $s'_t$. Once a MDP is combined with a policy in this way, this fixes the action or the rule to be applied for each state and the resulting combination behaves like a Markov chain. The objective is therefore to find a policy $\pi(.)$ that maximizes some cumulative function of the rewards, typically the expected discounted sum over a potentially infinite horizon.

More formally, an MDP is defined as a tuple

$$\langle \mathcal{S}', \mathcal{A}, \mathcal{P}, \mathcal{R} \rangle,$$

wherein:

$$S' = \{s'_i, i = 1: N_S\}$$

is the set of learning states of the agent (which correspond e.g. to the variables for QoS flow selection),

$$\mathcal{A} = \{a_i, i = 1: N_A\}$$ is the set of actions that can be taken by the agent,

$$p: S' \times \mathcal{A} \mapsto \Delta(S')$$

is a state transition probability function, giving $p(s'_{t+1}|s'_t, a_t)$,

$$r: S' \times S' \times \mathcal{A} \mapsto \mathbb{R}$$

is a reward function giving us $r_t = r(s'_t, a_t, s'_{t+1})$.

The reward may be expressed as the expected (or deterministic) reward when action $a_t$ is taken in state $s'_t$ and transition to state $s'_{t+1}$ is observed. A second model can be obtained by defining:

$$\mathcal{R}(s'_t, a_t) = \mathbb{E}[r_t|s'_t, a_t] = \mathbb{E}_{s'_{t+1} \sim p(s'_{t+1}|s'_t, a_t)}[r(s'_t, a_t, s'_{t+1})]$$

Solving the MDP amounts to finding the policy which maximizes the expected return from the current state:

$$\pi^*(s'_t) = \arg\max_\pi \mathbb{E}\left[\sum_{i=1}^{N} \gamma^{i-1} r_{t+i} | s'_t\right]$$

wherein $\pi(.)$ is a policy where we choose $a_t = \pi(s'_t)$ and $\gamma$ a discount factor satisfying $0 \le \gamma \le 1$.
In the present case, the agent (i.e. the controlled device 20 such as a robot) lies in its environment (e.g. a factory) that incorporates the wireless communication system 70. At each iteration, the decision maker (i.e. the control server 30) needs to decide which action to take between transmitting the control command using the first QoS flow or using the second QoS flow. A key requirement is to define the reward function that is given for each action by the environment. This point will be addressed later. Another key aspect of the MDP is the state-transition function, that characterizes what the environment will do next. In our case, the wireless communication system 70 is generally used as a black box, thus with no a priori knowledge of its statistical characterization. A solution in such a situation is therefore to rely on the reinforcement learning, RL, paradigm, an area of machine learning concerned with how to take actions in an environment in order to maximize the notion of cumulative reward.
Reinforcement learning can be combined with function approximation to address problems with a very large number of states. The most common RL algorithm is the so-called Q-learning algorithm, a model-free algorithm to learn the value of an action in a particular state:

$$Q(s'_t, a_t) = \mathbb{E}\left[\sum_{i=1}^{N} \gamma^{i-1} r_{t+i} | s'_t, a_t\right]$$

The Q-learning algorithm does not require a model of the environment (hence "model-free"), and it can handle problems with stochastic transitions and rewards without requiring adaptations. Q-learning at its simplest stores state value data in tables. This approach falters with increasing numbers of states/actions since the likelihood of the agent visiting a particular state and performing a particular action is increasingly small. In such a situation, Q-learning can be combined with function approximation. This makes it possible to apply the algorithm to larger problems, even when the state space is continuous. One solution is to use a neural network, NN, as a function approximator, leading to the so-called deep Q-learning reinforcement learning.
In preferred embodiments, a deep Q-learning RL algorithm is applied to select an optimal selection policy for choosing between at least two established QoS flows. Using this approach, the control server 30 tends to perform a segmentation of the learning state space $\mathcal{S}'$ into at least two regions in an optimal manner with respect to the long-term cumulative reward function. The separation is performed without a priori knowledge of the environment and is compatible with continuous state representation as it is often the case for the control of robots or vehicles. The present disclosure may be used with any known deep Q-learning RL algorithm and the choice of a specific deep Q-learning RL algorithm corresponds to a specific non-limitative embodiment of the present disclosure. More generally speaking, the present disclosure may be used with any known RL algorithm.

As discussed above, the setting of the reward function is important in that it influences the optimization of the selection policy.

According to a first example, the reward function may be set such that it combines two objectives, i.e. keeping the control performance within a given envelope, and favoring whenever possible, at least in case of congestion, the selection of the second QoS flow over the selection of the first QoS flow. This corresponds to a multi-objective MDP problem that can be solved using existing specific but complex approaches. It is also possible to rely on an ad-hoc approach where the reward function combines a first term and a second term:

- the first term is representative of a control performance of the control of the controlled device 20 by the control server 30, and decreases the reward when the control performance decreases,
- the second term decreases the reward when the first QoS flow is used compared to when the second QoS flow is used.

Hence, the first term enables to increase the reward if the control performance is improved, but a greater reward will be obtained if the control performance is improved while using the second QoS flow.

According to a non-limitative example, the reward function may be computed as follows:

$$r(s'_t, a_t, s'_{t+1}) = -f_1(s_{t+1}, x_{t+1}) \times f_2(a_t)$$

wherein:

- $f_1(\cdot)$ is the first term and is a positive function that decreases as the control performance increases,
- $f_2(\cdot)$ is the second term and is a positive function that yields a lower value when the second QoS flow is used compared to when the first QoS flow is used,
- $s_t$ is the state of the controlled device 20 (also referred to as "control state" in the following) and $x_t$ is the reference trajectory it is required to follow to perform the task.

In the above, the control state $s_t$ is differentiated from the learning state $s'_t$. In control, the control state $s_t$ corresponds basically to the set of variables considered by the control algorithm while in deep Q-learning, the learning state $s'_t$ corresponds to the input of the NN that is used to take the decision of the action to be taken. The control and learning states may be related to each other in some cases and, depending on the embodiments, they may be the same or they may be different. For instance, dealing with control, the controlled device 20 might be a robot that is due to follow a predetermined reference trajectory. The control state $s_t$ of the controlled device 20 will typically be defined by its position and velocity. Dealing with learning, the learning state $s'_t$ might be e.g. the difference between the reference trajectory and the control state $s_t$ of the controlled device 20.

For instance, $f_1(\cdot)$ and/or $f_2(\cdot)$ may be defined by the following expressions:

$$f_1(s_{t+1}, x_{t+1}) = e(s_{t+1}, x_{t+1})$$

$$f_2(a_t) = \begin{cases} \beta & \text{if } a_t = \text{use first QoS flow} \\ \alpha & \text{if } a_t = \text{use second QoS flow} \end{cases}$$

wherein:

- $e(s_t, x_t) = \|x_t - s_t\|$ is an error between the state $s_t$ of the controlled device 20 and the reference trajectory $x_t$ it is required to follow to perform the task, and $\|\cdot\|$ corresponds to a norm; in other words, the control performance is evaluated as a distance between the (control) state $s_t$ and the target trajectory $x_t$,
- $0 < \alpha < \beta$ are predetermined coefficients.

In this example, the learning state $s'_t$ is related to the (control) state $s_t$ of the controlled device 20 and corresponds for instance to $e(s_t, x_t)$.

According to another non-limitative example, the reward function may be computed as follows:

$$\begin{aligned}
&\text{if } s'_t < L_{th} \\
&\quad \text{if } a_t = \text{use first QoS flow} \\
&\qquad r(s'_t, a_t) = +\alpha_1 \\
&\quad \text{else} \\
&\qquad r(s'_t, a_t) = +\beta_1 \\
&\text{else} \\
&\quad \text{if } a_t = \text{use first QoS flow} \\
&\qquad r(s'_t, a_t) = -\alpha_2 \\
&\quad \text{else} \\
&\qquad r(s'_t, a_t) = -\beta_2
\end{aligned}$$

wherein:

- the learning state $s'_t$ corresponds for instance to $e(s_t, x_t)$,
- $L_{th}$ corresponds to a predetermined positive threshold used in the learning to try and maintain the distance between the control state $s_t$ and the target trajectory $x_t$ below a given value; note that $e(s_t, x_t)$ may actually exceed the threshold $L_{th}$ on some occasions, but the associated short-term reward is negative thereby decreasing the long-term reward,
- $0 < \alpha_1 < \beta_1$ and $0 < \alpha_2 < \beta_2$ are predetermined coefficients, for instance $0 < \alpha_1 < \beta_1 < \alpha_2 < \beta_2$ (e.g. $\alpha_1 = 10$, $\beta_1 = 20$, $\alpha_2 = 100$ and $\beta_2 = 200$).

In the above examples, the learning state $s'_t$ is related to the control state $s_t$ of the controlled device 20, which assumes that the control state $s_t$ is accurately known to the control server 30, via e.g. control feedback which includes a control state measurement. However, it is possible, in other embodiments, to consider a learning state $s'_t$ that is not related to the control state $s_t$. For instance, the learning state $s'_t$ may be defined as:

$$s'_t = \{\|x_t - x_{t-1}\|, \varepsilon_t, \varepsilon_{t-1}, \dots, \varepsilon_{t-E+1}\}$$

wherein $\varepsilon_t$ is an indicator of whether the controlled device 20 has received ($\varepsilon_t = 1$) or not ($\varepsilon_t = 0$) a new control command at iteration $t$. Such a learning state $s'_t$ is also based on control feedback in order to know which ones among the last $E$ control commands have been received by the controlled device 20 (wherein $\varepsilon_t$ may also be set to 0 by the control server 30 if no control feedback has been received at iteration $t$), but it does not need to receive a measurement of the (control) state $s_t$ of the controlled device 20.

Each of the reward functions defined above combines the two objectives of maximizing the control performance and minimizing the congestion level by favoring the second QoS flow. However, it does not check if the expected QoE is achieved. According to another example, it is proposed to rely on the Constrained MDP (COMDP) approach. In the COMDP, the optimal selection policy is searched for over feasible selection policies defined as:

$$\Pi_c = \left\{\pi: \mathcal{S}' \mapsto \mathcal{P}(\mathcal{A}) \mid \mathbb{E}\left[\sum_{i=1}^{N} \gamma^{i-1} c(s'_{i+1} | s'_i) \mid \pi\right] \leq c_0\right\}$$

wherein $c(.)$ is a cost value function, and $c_0 \in \mathbb{R}^+$ is the maximum allowed cumulative cost. In other words, the optimization is carried out under a constraint that the resulting selection policy satisfies a predetermined control performance criterion (e.g. the maximum allowed cumulative cost). The COMPD may then be solved by looking for:

$$\pi^*(s'_t) = \arg\max_{\pi \in \Pi_c} \mathbb{E}\left[\sum_{i=1}^{N} \gamma^{i-1} r_{t+i} \mid s'_t\right]$$

For instance, the reward function and the cost function may be defined as follows:

$$r(s'_t, a_t, s'_{t+1}) = -f'_2(a_t)$$

$$c(s'_t) = f'_1(s_t, x_t)$$

wherein:

- $f'_1(\cdot)$ is a positive function that decreases as the control performance increases,
- $f'_2(\cdot)$ is a positive function that yields a lower value when the second QoS flow is used compared to when the first QoS flow is used.

For instance, $f'_1(\cdot)$ and/or $f'_2(\cdot)$ may be defined by the following expressions:

$$f'_1(s_t, x_t) = e(s_t, x_t)$$

$$f'_2(a_t) = \begin{cases} \beta' & \text{if } a_t = \text{use first QoS flow} \\ \alpha' & \text{if } a_t = \text{use second QoS flow} \end{cases}$$

wherein $0 < \alpha' < \beta'$ are predetermined coefficients.

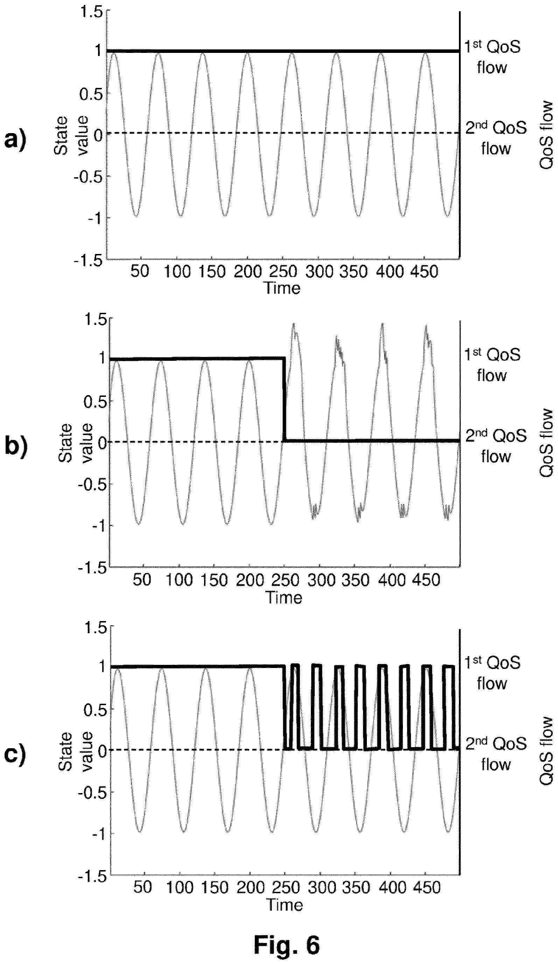

Figure 6 represents schematically simulation results illustrating how the control performance can be improved with a selection policy determined via reinforcement learning. In figure 6, a basic proportional controller is used to follow a sine reference signal. More specifically:

- part a) of figure 6 represents the case where the first QoS flow is always used, which corresponds basically to the prior art discussed above,
- part b) of figure 6 represents the case where two QoS flows are established, with the first QoS flow used by default and the second QoS flow used when a congestion is detected,
- part c) of figure 6 represents the case where two QoS flows are established, with the first QoS flow used by default and the second QoS flow used when a congestion is detected and when the phase of the task is compatible with the use of the second QoS flow, wherein the selection policy is determined via reinforcement learning.

In each of parts a), b) and c), the wireless communication system 70 is initially not congested and becomes congested at some point, the congestion being detected by the control server 30. When the wireless communication system 70 is congested, the control commands are transmitted with errors, with the PER increasing from 0.1 to 0.8. If a packet is lost, the last control command received by the controlled device 20 is used.

As illustrated by part a) of figure 6, when using always the first QoS flow, the controlled device 20 follows the sine reference signal, but at the expense of using many radio resources of the wireless communication system 70, which might impact the communication performance of other devices which might be denied access to the wireless communication system 70.

In part b) of figure 6, the second QoS flow is used when the congestion is detected. Hence, the amount of radio resources used is reduced, which might prevent other devices from being denied access to the wireless communication system 70. However, while the control performance is not degraded in linear portions of the sine reference signal, this is no longer the case in curved portions of the sine reference signal, where the expected QoE is not achieved anymore. Hence, part b) of figure 6 emphasizes different phases (i.e. linear portions and curved portions) of the task to be performed (i.e. following a sine reference signal) which require different QoS levels (in terms of control command delivery performance).

In part c) of figure 6, the selection policy determined via reinforcement learning is applied. As can be seen in part c) of figure 6, when a congestion is detected, the selection policy switches between the first QoS flow and the second QoS flow. More specifically, the selection policy selects the first QoS flow for curved portions of the sine reference signal and selects the second QoS flow for linear portions of the sine reference signal, thereby achieving the expected QoE for the whole duration of the control while using fewer radio resources when the wireless communication system 70 is congested (during the linear portions).

It is emphasized that the present disclosure is not limited to the above exemplary embodiments. Variants of the above exemplary embodiments are also within the scope of the present invention.

For instance, the above exemplary embodiments have been provided by considering mainly a first QoS flow and a second QoS flow. However, as discussed above, it is also possible to establish more than two QoS flows for the control application of the control server 30. For instance, it is possible to establish a third QoS flow having an associated QoS level that is lower than the QoS level of the first QoS flow and that is different (lower or greater) than the QoS level of the second QoS flow. The QoS flow selecting step S42 has therefore three different options for selecting a QoS flow for transmitting a control command, associated respectively to three different QoS levels.

Also, the previous examples with reinforcement learning have been provided by considering mainly the case of a control server 30 controlling a single controlled device 20 (possibly sharing the wireless communication system 70 with other devices). A key assumption for finding an optimal solution in the context of an MDP is the stationarity of the environment. Basically, the state transition matrix shall be constant over time. In case the other devices that share the environment (in particular the wireless communication system 70) with the controlled device 20 are devices of the same kind, the stationarity principle may not hold anymore, and the Markov property may not hold anymore. A first solution consists in combining all the controlled devices 20 as a single control system 10, but the computational complexity increases with the number of controlled devices 20. It also requires training the control system 10 for any possible combination of individual controlled devices 20. Another solution is to rely on multi-agent reinforcement learning, MARL, a sub-field of reinforcement learning. MARL focuses on studying the behavior of multiple learning agents that coexist in a shared environment.

**Claims**

1. A method (40), implemented by a control server (30), for controlling a controlled device (20), said control aiming at causing the controlled device to perform a task by sending control commands to said controlled device by using a wireless communication system (70), wherein said wireless communication system supports an establishment of different quality of service, QoS, flows associated to respective different QoS levels, said control method (40) comprising:

   - (S40) establishing at least two QoS flows for sending control commands to the controlled device, said at least two QoS flows comprising a first QoS flow and a second QoS flow, wherein the first QoS flow is associated to a greater QoS level than a QoS level associated to the second QoS flow,
   - (S41) determining a control command to be sent to the controlled device,
   - (S42) selecting a QoS flow to be used for sending the control command, among the at least two QoS flows established,
   - (S43) sending the control command to the at least one controlled device, via the wireless communication system, by using the selected QoS flow.

2. The control method (40) according to claim 1, wherein the task to be performed by the controlled device comprises a plurality of successive phases having respective QoS level requirements associated thereto and selecting the QoS flow comprises identifying which QoS flow among the at least two QoS flows established is compatible with the current phase of the task in that it provides a QoS level compatible with the QoS level required for the current phase of the task, the selected QoS flow corresponding to a QoS flow identified as compatible with the current phase of the task.

3. The control method (40) according to claim 1 or 2, wherein selecting the QoS flow comprises:

   - evaluating whether the wireless communication system is congested or close to be congested, and
   - responsive to detecting that the wireless communication system is congested or close to be congested: not considering the first QoS flow during the selection of the QoS flow.

4. The control method (40) according to claim 3, wherein, responsive to detecting that the wireless communication system is congested or close to be congested, the first QoS flow is not considered during the selection of the QoS flow only if a QoS level required for a current phase of the task to be performed by the controlled device is also provided by a QoS flow, among the at least two QoS flows established, other than the first QoS flow.

5. The control method (40) according to claim 2, wherein the first QoS flow is used only when it is determined that the QoS level required for the current phase of the task is not provided by another QoS flow among the at least two QoS flows established.

6.  The control method (40) according to any one of the preceding claims, further comprising (S44) receiving a control feedback from the controlled device, wherein the QoS flow is selected based on the received control feedback.

7.  The control method (40) according to claim 6, wherein the selection of the QoS flow uses a selection policy which includes a machine learning model trained by using a reinforcement learning algorithm.

8.  The control method (40) according to claim 7, wherein the machine learning model comprises a neural network trained by using a deep Q-learning reinforcement learning algorithm.

9.  The control method (40) according to any one of claims 7 to 8, wherein the reinforcement learning algorithm uses a reward function which combines a first term and a second term, wherein:

    - the first term is representative of a control performance of the control of the controlled device by the control server, and decreases the reward when the control performance decreases,
    - the second term decreases the reward when the first QoS flow is used compared to when the second QoS flow is used.

10. The control method (40) according to any one of claims 7 to 8, wherein the reinforcement learning algorithm uses a reward function which returns a smaller reward when the first QoS flow is used compared to when the second QoS flow is used, and wherein the training of the machine learning model is carried out under a constraint that the resulting selection policy satisfies a control performance criterion.

11. The control method (40) according to any one of claims 7 to 8, wherein the control server controls a plurality of controlled devices, and the machine learning model of the selection policy is trained by using a multi-agent reinforcement learning algorithm.

12. A computer program product comprising instructions which, when executed by at least one processor, configure said at least one processor to carry out a control method (40) according to any one of the preceding claims.

13. A computer-readable storage medium comprising instructions which, when executed by at least one processor, configure said at least one processor to carry out a control method (40) according to any one of claims 1 to 11.

14. A control server (30) for controlling a controlled device (20), said control aiming at causing the controlled device to perform a task, said control server (30) comprising a processing circuit (31) and a communication unit (32) which are configured to carry out a control method (40) according to any one of claims 1 to 11.

15. A control system (10) comprising a control server (30) according to claim 14, and at least one controlled device (20) controlled by the control server via a wireless communication system (70).

**Fig. 1**

**Fig. 2**

**Fig. 3**

S41 — Determining control command

Establishing first QoS flow and second QoS flow — S40

Selecting QoS flow — S42

Transmitting control command — S43

40

**Fig. 4**

S41 — Determining control command

S40 — Establishing first QoS flow and second QoS flow

S44 — Receiving control feedback

S42 — Selecting QoS flow

40

Transmitting control command — S43

**Fig. 5**

**Fig. 6**

Europäisches
Patentamt

European
Patent Office

Office européen
des brevets

# EUROPEAN SEARCH REPORT

Application Number

EP 23 30 5537

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/105992 A1 (ERICSSON TELEFON AB L M [SE]) 27 May 2022 (2022-05-27) | 1-6, 12-15 | INV.<br>H04W28/02 |
| Y | * pages 3-4,8 *<br>* pages 12,17 *<br>* figure 3 * | 7-11 | H04W28/08<br>H04W40/12<br>G05B19/418 |
| Y | WO 2021/013368 A1 (ERICSSON TELEFON AB L M [SE]) 28 January 2021 (2021-01-28)<br>* figures 1,3,6a *<br>* pages 5,16,18 * | 7-11 | |

| | TECHNICAL FIELDS SEARCHED (IPC) |
|---|---|
| | H04W<br>H04L<br>G05B |

The present search report has been drawn up for all claims

| Place of search | Date of completion of the search | Examiner |
|---|---|---|
| The Hague | 13 September 2023 | Kesting, Christiane |

EPO FORM 1503 03.82 (P04C01)

**ANNEX TO THE EUROPEAN SEARCH REPORT
ON EUROPEAN PATENT APPLICATION NO.**

EP 23 30 5537

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2023

| Patent document cited in search report | Publication date | Patent family member(s) | Publication date |
|---|---|---|---|
| WO 2022105992 A1 | 27-05-2022 | EP 4247596 A1 | 27-09-2023 |
| | | WO 2022105992 A1 | 27-05-2022 |
| WO 2021013368 A1 | 28-01-2021 | EP 4005154 A1 | 01-06-2022 |
| | | US 2023232272 A1 | 20-07-2023 |
| | | WO 2021013368 A1 | 28-01-2021 |

EPO FORM P0459

For more details about this annex : see Official Journal of the European Patent Office, No. 12/82